# DEMANDE DE BREVET EUROPEEN

(11) **EP 1 281 829 A1**
(43) Date de publication de la demande: **05.02.2003**
(21) Numéro de dépôt: 02291878.3
(22) Date de dépôt: 24.07.2002
(51) Int. Cl.: E05C 3/04

(54) **Système de verrouillage de la porte d'une enceinte tournante, notamment d'une baratte**

(30) Priorité: 03.08.2001 FR 0110458
(71) Demandeur: Armor Inox, F-56430 Mauron Cedex (FR)
(72) Inventeur: Dreano, Jean-Luc, 56490 Guilliers (FR)
(74) Mandataire: Nicolle, Olivier

(57) **Abrégé**

Système de verrouillage (10) de la porte (12) d'une enceinte rotative (14), notamment d'une baratte, du type comportant une poignée de serrage (16) et un élément de verrouillage, caractérisé en ce que l'élément de verrouillage comporte au moins 3 verrous rotatifs ¼ de tour (20) intégralement logés à l'intérieur du pourtour de la porte (12).

## Description

La présente invention concerne un système de verrouillage de la porte d'une enceinte tournante sous pression ou sous vide, notamment d'une baratte, destinée au traitement de produits alimentaires tels que viandes ou poissons.

Une enceinte rotative sous pression, telle qu'une baratte, comporte généralement un bâti métallique comportant deux montants verticaux sur l'extrémité desquels est monté basculant horizontalement un berceau. Un tonneau de traitement de produits est monté tournant sur lui-même autour d'un axe longitudinal par rapport au berceau. Le tonneau comporte une paroi cylindrique circulaire raccordée d'un côté à un fond arrondi vers l'extérieur et de l'autre côté à une paroi tronconique terminée par une embouchure de section inférieure à celle délimitée par la paroi cylindrique. Une porte circulaire apte à fermer l'embouchure est fixée à l'extrémité d'une potence dont l'autre extrémité comporte un axe de pivotement par rapport à l'extrémité d'un bras lui-même monté basculant par une autre extrémité par rapport à l'axe de basculement. Un système de verrouillage est prévu sur la porte et l'embouchure pour la maintenir fermée de manière étanche sur l'embouchure et solidaire du tonneau et pour désolidariser la porte de l'embouchure. Un tel système de verrouillage comprend sur la paroi de la porte des crochets de fermeture coopérant avec un rebord circulaire correspondant de l'embouchure.

Du document FR 9604088 il est également connu un dispositif de verrouillage de porte sur le col d'une enceinte rotative fermée, telle qu'une baratte. Afin de plaquer la porte sur l'enceinte, il est prévu sur la porte une tige pourvue à l'une de ses extrémités d'un taquet prévu pour pouvoir, en position de verrouillage, être maintenu dans une encoche du col de l' enceinte et à l'autre extrémité d'une partie filetée recevant un volant de manoeuvre taraudé qui permet de plaquer, par vissage, la porte sur l'enceinte pour obtenir l'étanchéité.

On connaît encore du document FR 8717266 un dispositif de verrouillage destiné à être utilisé pour fermer la porte d'une enceinte rotative contenant un gaz sous pression. Un tel dispositif comprend une vis, un écrou, des crochets et une oreille percée et se caractérise en ce que la tête de la vis est apte à être accrochée d'une manière amovible aux crochets portés par l'enceinte, l'autre extrémité de la vis passant dans l'oreille portée par la porte.

Les systèmes de verrouillage de porte d'enceintes rotatives sous pression de l'art antérieur qui viennent d'être décrits ci-dessus imposent que certaines précautions particulières soient observées.

En effet les ouvertures et les fermetures de porte sont d'autant plus délicates quand la porte se situe en position verticale, qu'elle est généralement de grande dimension et lourde et qu'elle doit :
- s'ouvrir et se fermer fréquemment à chaque remplissage et à chaque vidange de l'enceinte
- être désolidarisée de l'enceinte et maintenue par un joint tournant à une potence solidaire d'un châssis.
En outre, la porte verticale et de grande taille est en général suspendue en porte-à-faux à une potence pivotante. Il s'en suit que le centrage de la porte sur le col de l'enceinte est très difficile à effectuer. Il faut pour cela compenser le fléchissement du bras de la potence.
Par ailleurs, pour que les taquets des verrous fixés sur la porte puissent s'engager dans les encoches correspondantes du col de l'enceinte, les poignées de serrage comportant des tiges filetées - qui sont solidaires de la porte- doivent être parfaitement orientées, ce qui nécessite beaucoup de précautions.
De plus, d'autres problèmes tels que des problèmes de sécurité des opérateurs se posent et qui ne sont pas résolus de manière satisfaisante par les dispositifs de verrouillage actuellement connus pour enceintes rotatives sous pression ou sous vide.
En effet dans de tels dispositifs, en particulier, les poignées de manoeuvre et les crochets prévus sont fixés à l'extérieur du pourtour de la porte et du col de l'enceinte. Aussi ces dispositifs de verrouillage formant saillie peuvent lors de la rotation de l'enceinte causer des blessures à leurs utilisateurs.

La présente invention vise à pallier les inconvénients rappelés ci-dessus des dispositifs antérieurs.

A cet effet, la présente invention concerne un système de fermeture de la porte d'une enceinte rotative, notamment une baratte, du type comportant une poignée de serrage et un élément de verrouillage, caractérisé en ce que l'élément de verrouillage comporte au moins 3 verrous rotatifs ¼ de tour intégralement logés à l'intérieur du pourtour de la porte.

Le système de fermeture d'enceinte rotative conforme à la présente offre toutes les garanties de sécurité spécifiées par la réglementation. Il permet par ailleurs une ouverture rapide et une fermeture facilitée.

D'autres caractéristiques alternatives ou complémentaires du système de fermeture de la présente invention sont les suivantes :
- chacun des verrous du système de fermeture conforme à l'invention est maintenu à la porte par un élément de fixation, de préférence une vis.
- chacun des verrous comporte un axe principal qui coopère avec le col de l'enceinte, de préférence par un taquet à galet
- l'axe principal est mobile en translation le long de son axe de rotation
- l'axe principal comporte une rampe de centrage située diamétralement à l'opposé de la poignée
- la rampe a la forme d'une portion conique
- la rampe a la forme d'un chanfrein à méplat oblique
- la poignée est agencée selon un angle déterminé par rapport à l'axe principal de telle sorte qu'en position fermée, la poignée de manoeuvre du verrou soit dissimulée derrière le pourtour de la porte
- le positionnement de la poignée de manoeuvre du verrou, côté col de l'enceinte, est assuré par un ergot(une goupille) solidaire de l'axe tournant qui se déplace dans une portion de rainure circulaire d'environ 90° jusqu'en butée position ouverte d'un côté et fermée de l'autre.
- un dispositif de friction est prévu, ce par quoi est assuré le maintien de la poignée en position ouverte
- un dispositif de sollicitation axiale est prévu
- ledit dispositif de friction et/ou de sollicitation est constitué par un jeu de rondelles type Belleville

Un dispositif de motorisation de chacun des verrous (20) peut d'autre part être prévu.

Les caractéristiques et autres avantages du dispositif de verrouillage conforme à l'invention vont maintenant être décrits à l'aide d'un mode de réalisation particulier en référence aux dessins annexés, dans lesquels :

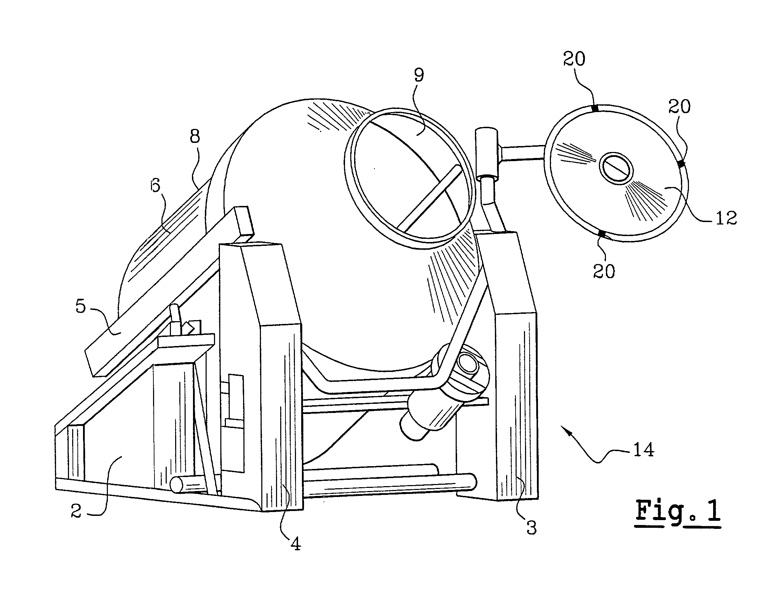

- la figure 1 est une vue en perspective d'une baratte en position ouverte et embouchure haute ;

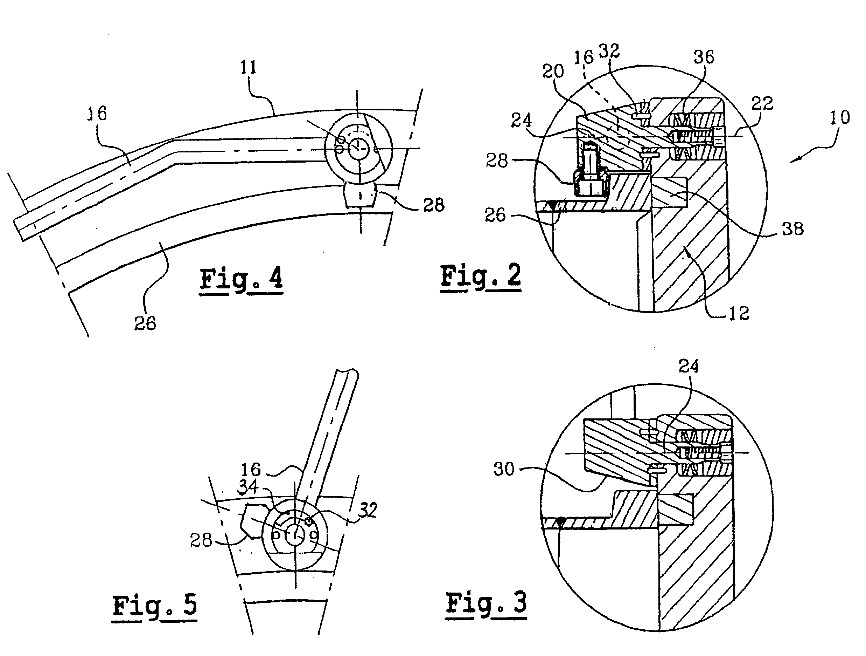

- la figure 2 est vue en coupe d'un système de verrouillage de baratte conforme à l'invention en position fermée ;
- la figure 3 est une vue en coupe d'un système de verrouillage de baratte conforme à l'invention en position ouverte ;
- la figure 4 est une vue d'une poignée de porte du système de verrouillage de l'invention en position fermée ;
- la figure 5 est une vue d'une poignée de porte du système de verrouillage de l'invention en position ouverte ;

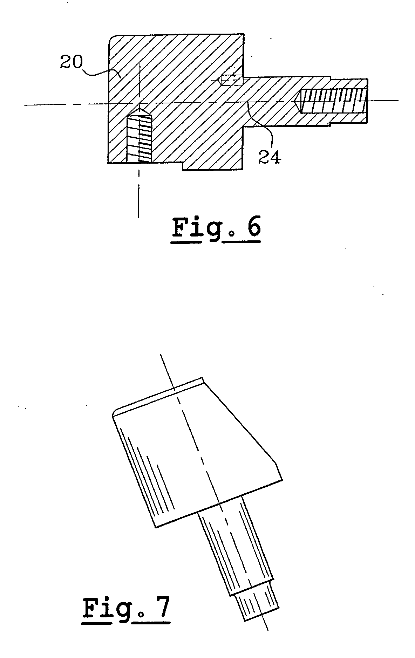

- la figure 6 est une vue en coupe de l'axe principal d'un verrou du système de verrouillage conforme à l'invention ; et
- la figure 7 est une vue de côté de l'axe principal d'un verrou du système de verrouillage de l'invention.

Comme on peut le voir sur les figures, la baratte 14 comprend un bâti 2 métallique comportant deux montants verticaux 3,4 sur l'extrémité desquels est monté basculant horizontalement un berceau 5. Un tonneau 6 de traitement de produits est monté tournant sur lui-même autour d'un axe longitudinal 7 par rapport au berceau 5. Le tonneau 6 comporte une paroi cylindrique circulaire 8 raccordée d'un côté à un fond arrondi vers l'extérieur et de l'autre côté à une paroi tronconique terminée par une embouchure 9 de section inférieure à celle délimitée par la paroi cylindrique. Une porte circulaire 12 apte à fermer l'embouchure 9 est fixée à l'extrémité d'une potence dont l'autre extrémité comporte un axe de pivotement par rapport à l'extrémité d'un bras lui-même monté basculant par une autre extrémité par rapport à l'axe de basculement.

Un système de verrouillage 10 est prévu sur la porte 12 et l'embouchure 9 pour la maintenir fermée de manière étanche sur l'embouchure et solidaire du tonneau 6 et pour désolidariser la porte 12 de l'embouchure 9. Un tel système de verrouillage 10 comprend une série de verrous 20 rotatifs ¼ de tour intégralement logés à l'intérieur du pourtour de la porte 12 et répartis de manière uniforme.

Chaque verrou 20, qui est maintenu à la porte 12 par une vis de fixation (22), pivote sur son axe (24) et prend appui sur la face arrière du col de la baratte (26) par un taquet à galet (28), ce dernier se bloquant sur la face arrière du col de la baratte quelle que soit son orientation sur la porte.

L'axe principal (24) comporte une rampe de guidage (30) située diamétralement à l'opposé de la poignée de serrage (16). Cette rampe de guidage ayant la forme d'un chanfrein à méplat oblique ou d'une portion conique, assure, pendant sa fermeture, le pré-centrage de la porte (12), les verrous (20) avec leur rampe (30) glissant obligatoirement sur le pourtour du col de l'embouchure de la baratte.

Le galet-taquet (28) perpendiculaire à l'axe de rotation du verrou est légèrement conique à son extrémité afin d'assurer par un quart de tour une pression progressive sur la face arrière du col de l'embouchure de la baratte qui possède elle-même un chanfrein ayant sensiblement la même conicité. Le galet conique (28) exerce une pression qui comprime, par réaction, le joint (38) qui assure ainsi l'étanchéité de la porte (12).

Comme on peut le voir en particulier sur la figure 4, en position fermée la poignée (16) de manoeuvre du verrou (20), est avantageusement dissimulée derrière le pourtour de la porte (12), sans dépassement tangentiellement au col de l'embouchure de la baratte. Ainsi pendant la rotation de la baratte tout risque pour les opérateurs est évité.

Un dispositif par friction (36), côté porte (12), est prévu par des rondelles type Belleville, ce par quoi est assuré le maintien de la poignée (16) en position ouverte. Lorsque le verrou (20) est fermé lesdites rondelles (36) sont comprimées et exercent ainsi également une sollicitation axiale sur la porte.

Le positionnement précis de la poignée (16) de manoeuvre, côté col de l'embouchure de la baratte, est assuré par un ergot (une goupille) (32) solidaire de l'axe rotatif qui se déplace dans une portion de rainure circulaire (34) d'environ 90° jusqu'en butée en position ouverte d'un côté et fermée de l'autre.

## Revendications

1. Système de verrouillage (10) de la porte (12) d'une enceinte rotative (14), notamment une baratte, du type comportant une poignée de serrage (16) et un élément de verrouillage, **caractérisé en ce que** l'élément de verrouillage comporte au moins 3 verrous rotatifs ¼ de tour (20) intégralement logés à l'intérieur du pourtour de la porte (12).

2. Système de verrouillage selon la revendication 1, **caractérisé en ce que** chacun des verrous (20) est maintenu à la porte (12) par un élément de fixation (22), notamment une vis.

3. Système de verrouillage selon la revendication 1 ou 2, **caractérisé en ce que** chacun des verrous (20) comporte un axe principal (24) qui coopère avec le col (26) de l'enceinte (14), de préférence par un taquet à galet (28).

4. Système de verrouillage selon la revendication 3,
**caractérisé en ce que** l'axe principal (24) est mobile en translation le long de son axe de rotation.

5. Système de verrouillage selon la revendication 3 ou 4, **caractérisé en ce que** l'axe principal (24) comporte une rampe de centrage (30) située diamétralement à l'opposé de la poignée (16).

6. Système de verrouillage selon la revendication 5, **caractérisé en ce que** la rampe (30) a la forme d'une portion conique.

7. Système de verrouillage selon la revendication 5, **caractérisé en ce que** la rampe (30) a la forme d'un chanfrein à méplat oblique.

8. Système de verrouillage selon l'une quelconque des revendications 1 à 7, **caractérisé en ce que** la poignée (16) est agencée selon un angle déterminé par rapport à l'axe principal (24) de telle sorte qu'en position fermée, la poignée (16) de manoeuvre du verrou (20) soit dissimulée derrière le pourtour de la porte (12).

9. Système de verrouillage selon l'une quelconque des revendications 1 à 8, **caractérisé en ce que** le positionnement de la poignée (16) de manoeuvre du verrou (20), côté col (26) de l'enceinte (14), est assuré par un ergot (une goupille) (32) solidaire de l'axe tournant qui se déplace dans une portion de rainure circulaire (34) d'environ 90° jusqu'en butée position ouverte d'un côté et fermée de l'autre.

10. Système de verrouillage selon l'une quelconque des revendications 1 à 9, **caractérisé en ce qu'**un dispositif de friction (36) est prévu, ce par quoi est assuré le maintien de la poignée en position ouverte.

11. Système de verrouillage selon l'une quelconque des revendications 1 à 10, **caractérisé en ce qu'**un dispositif de sollicitation axiale (36) sur la porte est prévu.

12. Système de verrouillage selon la revendication 10 et 11, prises en combinaison, le dispositif étant constitué par un jeu de rondelles type Belleville.

13. Système de verrouillage selon l'une quelconque des revendications 1 à 12, **caractérisé en ce qu'**il comprend en outre un dispositif de motorisation de chacun des verrous (20).
